# EUROPEAN PATENT APPLICATION

(11) **EP 4 796 586 A1**
(43) Date of publication of application: **26.08.2026**
(21) Application number: 25816091.0
(22) Date of filing: 26.05.2025
(51) Int. Cl.: C08K 5/11, C08L 67/02

(54) **RESIN COMPOSITION AND BIODEGRADABLE RESIN PRODUCT COMPRISING SAME**

(30) Priority: 29.05.2024 KR 20240070233
(71) Applicant: LG Chem, Ltd., Seoul 07336 (KR)
(72) Inventor: BAEK, Jongyeol, Daejeon 34122 (KR); UM, Jun Geun, Daejeon 34122 (KR); LEE, Jiyoung, Daejeon 34122 (KR); KIM, Moonsoo, Daejeon 34122 (KR)
(74) Representative: Goddar, Heinz J.
(86) International application number: PCT/KR2025/007080
(87) International publication number: WO 2025/249850

(57) **Abstract**

The present invention relates to a resin composition and a biodegradable resin molded article comprising the same. The resin composition of the present invention can realize tackiness, mechanical properties, and permeability suitable for packaging wrap applications, while maintaining the biodegradability of polybutylene adipate terephthalate.

## Description

### [TECHNICAL FIELD]

### Cross-Reference to Related Application(s)

This application claims the benefit of priority from Korean Patent Application No. 10-2024-0070233, filed on May 29, 2024, and all content disclosed in the documents of the foregoing Korean patent applications is incorporated herein by reference and forms part of this specification.

The present invention relates to a resin composition and a biodegradable resin molded article comprising the same.

### [BACKGROUND ART]

Recently frequently occurring natural disasters have brought awareness that environmental pollution and the resulting climate change are serious problems that must be addressed with the highest priority. Among them, reducing the use of disposable plastics is an environmental pollution improvement activity that can be practiced in daily life, and various countries are implementing it as a matter of policy. As part of these policies, the use of eco-friendly or biodegradable plastics is also being recommended, and various plastics that are biodegradable in soil or marine environments are being researched and developed.

Meanwhile, for food packaging material, plastic film is mostly used for preventing deterioration and for long-term preservation during the distribution process of food. Among them, polyvinyl chloride wrap is generally utilized as cling film, cling wrap, and the like due to its low price and excellent packaging characteristics. However, polyvinyl chloride has problems such as the generation of chlorine gas upon disposal/incineration after use and contamination during the recycling process. In addition, the government is strengthening regulations on the use of polyvinyl chloride wrap to improve the quality of recycled products and reduce harmful gas emissions.

In order to replace such polyvinyl chloride wrap, research on stable materials with functionality is required, and in response to this demand, polyolefin (mainly LLDPE) wrap has been developed. However, it is difficult to achieve properties such as tackiness at a level that can replace polyvinyl chloride, and there is a problem in that recycling is difficult because a multilayer design is generally used to achieve the required properties.

Therefore, there is a need for research on materials that use biodegradable substances capable of naturally decomposing in soil or the marine environment, and that possess the gas barrier, mechanical, and chemical properties required for the aforementioned food packaging.

### [DETAILED DESCRIPTION OF THE INVENTION]

### [TECHNICAL PROBLEM]

The present invention seeks to provide a resin composition that satisfies the tackiness, mechanical properties, and permeability required for a wrap film, while having biodegradable characteristics.

In addition, the present invention seeks to provide a biodegradable resin molded article comprising the resin composition.

### [TECHNICAL SOLUTION]

To solve the above problems, the present invention provides a resin composition comprising polybutylene adipate terephthalate (PBAT) and triacetin, wherein a weight average molecular weight of the polybutylene adipate terephthalate is 100,000 to 200,000 g/mol, and comprising 1 to 25 parts by weight of the triacetin based on a total of 100 parts by weight of the resin composition.

According to an example, the weight average molecular weight of the polybutylene adipate terephthalate may be 130,000 to 190,000 g/mol.

According to an example, a polydispersity index (PDI) of the polybutylene adipate terephthalate may be 2.5 or less.

According to an example, a melt index of the polybutylene adipate terephthalate (measured at 190 °C under a 2.16 kg load in accordance with ASTM D1238) may be 2.0 to 6.0 g/10 min.

According to an example, it may comprise 1 to 20 parts by weight of triacetin based on a total of 100 parts by weight of the resin composition.

In addition, the present invention provides a biodegradable resin molded article comprising the resin composition of the present invention.

According to an example, a modulus value measured in accordance with ASTM D882 may be 30 to 100 MPa.

According to an example, a tackiness value measured in accordance with ASTM D882 may be 5 to 20 N.

According to an example, the oxygen permeability of the biodegradable resin molded article may be 100 to 400 cc/m²·day·atm based on a sheet thickness of 500 to 600 µm.

According to an example, the moisture permeability of the biodegradable resin molded article may be 50 to 95 g/m²·day based on a sheet thickness of 500 to 600 µm.

The terms used in this specification are used only to describe exemplary embodiments, and are not intended to limit the present invention.

A singular expression includes a plural expression unless the context clearly indicates otherwise.

In this specification, terms such as "comprising," "having," or "containing" are intended to describe the implemented features, numbers, steps, components, or combinations thereof, and do not exclude the possibility of one or more other features, numbers, steps, components, their combinations, or additions.

The present invention may undergo various modifications and take various forms, and certain embodiments will be exemplified and described in detail below. However, these examples are not intended to limit the present invention to any particular disclosed form, and the present invention should be understood to include all modifications, equivalents, and alternatives that fall within the spirit and technical scope of the invention.

Hereinafter, the present invention will be described in detail.

The present invention provides a resin composition comprising polybutylene adipate terephthalate (PBAT) and triacetin, wherein a weight average molecular weight of the polybutylene adipate terephthalate is 100,000 to 200,000 g/mol, and comprising 1 to 25 parts by weight of triacetin based on a total of 100 parts by weight of the resin composition.

Polyester-based resin is used in various industrial fields due to its excellent mechanical properties and chemical properties. Among them, polybutylene adipate terephthalate (PBAT), a soft polyester, is biodegradable, and thus is drawing attention as a substitute for polyolefin-based polymers mainly used for food packaging material film. However, there is a problem that the tackiness and gas barrier properties of PBAT are somewhat insufficient for using soft PBAT alone for such applications.

The inventors of the present invention conducted research on blending with various additives as part of research for using polybutylene adipate terephthalate (PBAT), a type of biodegradable resin, as a packaging wrap, and confirmed that when triacetin was used among the additives, it had excellent miscibility with polybutylene adipate terephthalate.

Specifically, the inventors of the present invention selected a group of substances predicted to have high miscibility with polybutylene adipate terephthalate using the Hansen solubility parameter of polybutylene adipate terephthalate and an additive, and then prepared a resin composition by mixing with polybutylene adipate terephthalate and evaluated the migration of the additive. As a result, it was experimentally confirmed that triacetin has excellent miscibility with polybutylene adipate terephthalate.

The triacetin is a compound represented by the following Chemical Formula 1, and is a triester of glycerol and acetic acid:

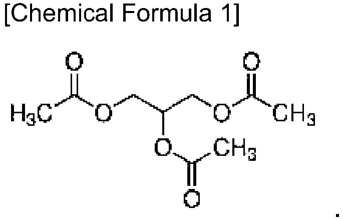

In addition, when the weight average molecular weight of the polybutylene adipate terephthalate is 100,000 to 200,000 g/mol, the mechanical properties such as modulus, strength, and elongation of the resin composition blended with triacetin and the polybutylene adipate terephthalate are improved, and by comprising 1 to 25 parts by weight of triacetin based on a total of 100 parts by weight of the resin composition, the tackiness is improved, and upon discovering that appropriate oxygen permeability and moisture permeability can be realized, the present invention was completed.

The resin composition of the present invention includes polybutylene adipate terephthalate having a weight average molecular weight of 100,000 to 200,000 g/mol. If the weight average molecular weight of the polybutylene adipate terephthalate is less than 100,000, extrusion molding is difficult due to low melt viscosity, and a problem may arise in that the modulus, strength, and elongation values are low when producing a molded article, making it impossible to realize mechanical properties suitable for the application. In addition, if the weight average molecular weight of the polybutylene adipate terephthalate exceeds 200,000 g/mol, the modulus, strength, and the like may increase to a level inconvenient for use as a food packaging material. Preferably, the weight average molecular weight of the polybutylene adipate terephthalate may be 110,000 g/mol or more, 120,000 g/mol or more, or 130,000 g/mol or more, and 200,000 g/mol or less, or 190,000 g/mol or less.

Meanwhile, the resin composition of the present invention may comprise 1 to 25 parts by weight of triacetin based on a total of 100 parts by weight of the resin composition. If less than 1 part by weight of triacetin is comprised based on a total of 100 parts by weight of the resin composition, the effect of improving tackiness due to the addition of triacetin may be insignificant and thus may not be suitable for the purpose of the present invention, and if more than 25 parts by weight of triacetin is comprised based on a total of 100 parts by weight of the resin composition, migration of triacetin may occur when preparing the blending resin composition due to the excessive use of triacetin. Preferably, based on a total of 100 parts by weight of the resin composition, it may comprise 1 part by weight or more, 3 parts by weight or more, 5 parts by weight or more, 7 parts by weight or more, or 10 parts by weight or more of triacetin, and 23 parts by weight or less, 22 parts by weight or less, or 20 parts by weight or less. For example, based on a total of 100 parts by weight of the resin composition, it may comprise 1 to 20 parts by weight, or 5 to 20 parts by weight, or 10 to 20 parts by weight of triacetin.

In addition, in the present invention, the polydispersity index (PDI) of the polybutylene adipate terephthalate may be 2.5 or less.

In addition, the melt index of the polybutylene adipate terephthalate (measured at 190 °C under a 2.16 kg load in accordance with ASTM D123) may be 2.0 to 6.0 g/10 min.

When the polydispersity index and/or melt index of polybutylene adipate terephthalate satisfy the above ranges, miscibility with triacetin is improved, allowing for the preparation of a homogeneous resin composition, and processability and productivity can be improved while reducing surface defects when producing a molded article comprising the resin composition. Specifically, the melt index of the polybutylene adipate terephthalate (measured at 190 °C under a 2.16 kg load in accordance with ASTM D123) may be 2.0 g/10 min or more, 2.3 g/10 min or more, or 2.5 g/10 min or more, and 5.7 g/10 min or less, 5.5 g/10 min or less, 5.3 g/10 min or less, or 5.0 g/10 min or less.

Meanwhile, the resin composition according to the present invention may comprise only the polybutylene adipate terephthalate and triacetin as resin components. That is, it may be preferable for the resin composition according to an example of the present invention not to comprise any other resin or polymer component other than polybutylene adipate terephthalate. For example, the resin composition according to the present invention may comprise 1 to 25 parts by weight of triacetin based on a total of 100 parts by weight of the resin composition, and the remainder as polybutylene adipate terephthalate, but the present invention is not limited thereto.

Meanwhile, if necessary, the resin composition of the present invention may further comprise other additives. As the additive, common additives used during the molding of resin compositions in the technical field to which the present invention pertains, that is, in the field of thermoplastic polymers, can be used without particular limitation. The additive may comprise a heat stabilizer, a UV stabilizer, and the like.

In addition, according to another aspect of the present invention, a biodegradable resin molded article comprising the aforementioned resin composition is provided. The biodegradable resin molded article may be a biodegradable film.

According to an example of the invention, the biodegradable resin molded article may have a modulus value of 30 to 100 MPa as measured in accordance with ASTM D882. If the modulus value is less than 30 MPa, it may be inconvenient to use as a packaging wrap, and if it exceeds 100 MPa, the easy-cut characteristic may be degraded. Preferably, the modulus value may be 30 MPa or more, 31 MPa or more, 32 MPa or more, or 33 MPa or more, and 95 MPa or less, 90 MPa or less, or 85 MPa or less.

According to an example of the invention, the biodegradable resin molded article may have a tackiness value of 5 to 20 N as measured in accordance with ASTM D882. When the tackiness of the biodegradable resin molded article satisfies the above range, it is suitable for use as a food packaging material. Preferably, the tackiness value may be 5 N or more, and 19 N or less, 18 N or less, 17 N or less, or 16 N or less.

According to an example of the invention, the oxygen permeability of the biodegradable resin molded article may be 100 to 400 cc/m²·day·atm based on a sheet thickness of 500 to 600 µm. Preferably, the oxygen permeability may be 150 cc/m²·day·atm, 200 cc/m²·day·atm, or 230 cc/m²·day·atm or more, and 370 cc/m²·day·atm or less, 350 cc/m²·day·atm or less, 330 cc/m²·day·atm or less, 300 cc/m²·day·atm or less, or 270 cc/m²·day·atm or less. The oxygen permeability is measured at 23 °C and RH 0%, and a specific measurement method may be specified in the examples described later.

According to an example of the invention, the moisture permeability of the biodegradable resin molded article may be 50 to 95 g/m²·day based on a sheet thickness of 500 to 600 µm. Preferably, the moisture permeability may be 55 g/m²·day or more, 60 g/m²·day or more, 65 g/m²·day or more, 70 g/m²·day or more, 75 g/m²·day or more, 80 g/m²·day or more, or 85 g/m²·day or more, and 90 g/m²·day or less. The moisture permeability is measured at 38 °C and RH 90%, and a specific measurement method may be specified in the examples described later.

The biodegradable resin molded article according to an example of the present invention can be used for applications such as food packaging material based on such excellent tackiness, mechanical properties, and gas permeability.

### [ADVANTAGEOUS EFFECTS OF THE INVENTION]

As described above, the resin composition of the present invention can realize tackiness, mechanical properties, and permeability suitable for packaging wrap applications, while maintaining the biodegradability of polybutylene adipate terephthalate.

### [EMBODIMENTS OF THE INVENTION]

Hereinafter, preferred embodiments are presented to aid in the understanding of the invention. However, the following examples are for illustrating the present invention only, and are not intended to limit the present invention to them alone.

### <Examples>

### Preparation of resin composition 1

A resin composition was prepared according to the composition in Table 1 below. Specifically, polybutylene adipate terephthalate was dried at 80 °C. After an internal mixer (Brabender Co.) was heated to 190 °C, 83.3 parts by weight of dried polybutylene adipate terephthalate and 16.7 parts by weight of the additive listed in Table 1 below were added based on a total of 100 parts by weight of the resin composition and blended at 190 °C for 6 minutes to prepare a resin composition.

The polybutylene adipate terephthalate used had a weight average molecular weight of 130,000 g/mol and a polydispersity index (PDI) of 2.5 (MI = 5.0 g/10min @ 190 °C, 2.16 kg).

### Evaluation of properties

Evaluations of melting temperature (Tm), tensile strength, elongation, and migration were conducted on the prepared resin composition, and the results are shown in Table 1 below.

### 1) melting temperature (Tm)

- Using Differential Scanning Calorimetry (DSC, TA DSC250)
- -60 to 200 °C, heating rate 10 °C/min, thermal properties analyzed using Trios S/W
- About 5 to 10 mg of the resin composition was prepared, pressed onto a pan, loaded and then measured

### 2) Tensile strength and elongation

- Using Hot press from Wabash Co.
- A 500~600 um sheet was prepared by pressing at 190 °C for 3 min, followed by pressing at 30 °C for 2 min
- Testing/measurement standard and specimen in accordance with ASTM D882 were used, measurement speed 500 mm/min

### 3) Migration evaluation

The prepared resin composition was cooled to room temperature, and one day after cooling it was evaluated by wiping with a tissue to determine whether the additive had transferred onto the tissue.

**[TABLE 1]**

| | PBAT content (parts by weight) | Additive | DSC, Tm (°C) | Tensile strength (MPa) | Tensile Elongation (%) | Migration |
|---|---|---|---|---|---|---|
| Comparative Example 1-1 | 100 | - | 110.9 | 21.3 | 1,331 | - |
| Comparative Example 1-2 | 83.3 | LG chem, GL500¹⁾ | 117.9 | 22.0 | 1,438 | O |
| Comparative Example 1-3 | 83.3 | Diisononyl adipate | 117.9 | 23.9 | 1,410 | O |
| Comparative Example 1-4 | 83.3 | Acetyl tributyl citrate | 113.9 | 20.4 | 1,413 | O |
| Comparative Example 1-5 | 83.3 | Epoxidized soybean oil²⁾ | 118.4 | 23.1 | 1,256 | O |
| Example 1-1 | 83.3 | Triacetin | 120.2 | 25.1 | 1,238 | X |

| | | | | | | |
|---|---|---|---|---|---|---|
| 1) LG CHEM GL500 (1,4-Benzenedicarboxylic acid, mixed Bu and 2-ethylhexyl diesters) 2) Epoxidized soybean oil (product name: 412333, manufacturer: Sigma Aldrich) | | | | | | |

### Preparation of resin composition 2

A resin composition was prepared according to the composition in Table 2 below. Specifically, after drying polybutylene adipate terephthalate at 80 °C, polybutylene adipate terephthalate and triacetin were uniformly mixed in the composition described in Table 2 below based on a total of 100 parts by weight of the resin composition. Thereafter, it was fed into a twin-screw extruder (Korea EM Co., Φ= 32 mm, L/D= 40~44) heated to 170 °C, and extruded under extrusion conditions of an extrusion temperature of 170 °C, an extrusion speed of 10 kg/hr, and a screw rotation speed of 200 rpm to prepare a resin composition.

**[TABLE 2]**

| | PBAT content (parts by weight) | PBAT weight average molecular weight (g/mol) | PBAT PDI | Triacetin content (parts by weight) | DSC, Tm (°C) |
|---|---|---|---|---|---|
| Comparative Example 2-1 | 100 | 130,000 | 2.5 | - | 121.3 |
| Comparative Example 2-2 | 85 | 50,000 | 2.5 | 15 | 110.3 |
| Example 2-1 | 99 | 130,000 | 2.5 | 1 | 121.0 |
| Example 2-2 | 95 | 130,000 | 2.5 | 5 | 119.6 |
| Example 2-3 | 85 | 130,000 | 2.5 | 15 | 110.7 |
| Example 2-4 | 75 | 130,000 | 2.5 | 25 | 106.6 |
| Example 2-5 | 85 | 160,000 | 2.5 | 15 | 112.1 |
| Example 2-6 | 85 | 190,000 | 2.5 | 15 | 112.5 |

### Evaluation of properties

Evaluations of modulus, strength, elongation, migration, and tackiness were conducted on the prepared resin composition, or a sheet or film comprising the same, and the results are shown in Table 3 below.

### 1) Press specimen modulus, strength, and elongation

- Using Hot press from Wabash Co.
- A 500~600 um sheet was prepared by pressing at 190 °C for 3 min, followed by pressing at 30 °C for 2 min
- Testing/measurement standard and specimen in accordance with ASTM D882 were used, measurement speed 500 mm/min

### 2) Film specimen modulus, strength, and elongation

- Using Cast film equipment from Eurexma Co.
- A film with a thickness of less than 100 um was prepared at an extrusion temperature of 150~170°C and an extrusion speed of 60~90 rpm
- Testing/measurement standard and specimen in accordance with ASTM D882 were used, measurement speed 500 mm/min

### 3) Migration

The prepared resin composition was cooled at room temperature, and one day after cooling it was evaluated with a tissue to determine whether the additive had transferred onto the tissue.

### 4) Tackiness

- Using Cast film equipment from Eurexma Co.
- A film with a thickness of less than 100 um was prepared at an extrusion temperature of 150~170°C and an extrusion speed of 60~90 rpm
- Two pieces of film were prepared by cutting to a width of 13mm and a length of 150mm. The middle 50mm sections of each film were overlapped with each other and pressed at 1kg for 3 minutes
- Using tensile tester from ZwickRoell Co.
- The maximum N (Newton) value was measured in accordance with ASTM D882 measurement standard, at a measurement speed of 50 mm/min

**[TABLE 3]**

| | Press specimen | | | Film specimen | | | Migration | Tackiness (N) |
|---|---|---|---|---|---|---|---|---|
| | Modulus (MPa) | Strength (MPa) | Elongation (%) | Modulus (MPa) | Strength (MPa) | Elongation (%) | | |
| Compara tive Example 2-1 | 85.8 | 25.1 | 1,238 | 86.4 | 76.4 | 236 | - | < 5.0 |
| Compara tive Example 2-2 | 15.4 | 12.5 | 658 | 17.3 | 27.3 | 172 | X (Excellent) | 14.3 |
| Example 2-1 | 80.5 | 25.3 | 1,325 | 79.8 | 78.5 | 256 | X (Excellent) | 5.1 |
| Example 2-2 | 70.1 | 25.2 | 1,352 | 68.8 | 79.2 | 264 | X (Excellent) | 6.5 |
| Example 2-3 | 41.5 | 25.9 | 1,557 | 40.9 | 81.9 | 274 | X (Excellent) | 15.2 |
| Example 2-4 | 33.5 | 19.3 | 1,405 | 34.2 | 79.4 | 329 | △ (Slightly slippery) | 6.2 |
| Example 2-5 | 43.3 | 25.4 | 1,322 | 41.1 | 79.9 | 285 | X (Excellent) | 15.0 |
| Example 2-6 | 40.6 | 25.8 | 1,310 | 42.3 | 80.5 | 294 | X (Excellent) | 15.1 |

As can be seen in Table 3 above, the resin composition according to the example of the present invention showed similar tensile strength, decreased modulus, and increased elongation compared to Comparative Example 2-1, which does not comprise triacetin, thus exhibiting easy-cut characteristics. Meanwhile, it was confirmed that Comparative Example 2-2, in which the molecular weight of PBAT is lower than that of the PBAT comprised in the resin composition of the present invention, had very low tensile properties compared to conventional PBAT, making it unsuitable for use as a wrap.

### Barrier property evaluation

A resin composition was prepared with the composition in Table 4 below using the preparation method of Preparation of resin composition 1, and this was prepared into a sheet, after which the oxygen permeability and moisture permeability were measured and are shown in Table 4 below.

### 1) sheet preparation

- Using Hot press from Wabash Co.
- A 500~600 um sheet was prepared by pressing at 190 °C for 3 min, followed by pressing at 30 °C for 2 min

### 2) oxygen permeability

- Using oxygen permeability tester from Systech Illinois Co. (8001)
- A circular sheet of 5 cm² size was used
- Oxygen (>99.9%) supply pressure 1.5 bar, relative humidity 0%, measurement temperature 23°C, measured for 48 hours at 15-minute intervals

### 3) moisture permeability

- Using Moisture permeability tester form Systech Illinois Co. AquaSense (7101)
- A circular sheet of 5 cm² size was used
- Nitrogen (Carrier gas) supply pressure 2 bar, relative humidity 90%, measurement temperature 23°C, measured for 48 hours at 10-minute intervals

**[TABLE 4]**

| | Resin type and content (parts by weight) | Resin weight average molecular weight (g/mol) | Resin PDI | Triacetin content (parts by weight) | oxygen permeability (cc/m²·day·atm) | moisture permeability (g/m²·day) |
|---|---|---|---|---|---|---|
| Comparat ive Example 3-1 | PBAT (100) | 130,000 | 2.5 | - | 67 | 54 |
| Comparat ive Example 3-2 | PVC¹⁾ (100) | 150,000 | 2.5 | - | 500 | 24 |
| Comparat ive Example 3-3 | PBAT (66.7) | 130,000 | 2.5 | 33.3 | 885 | 100 |
| Example 3-1 | PBAT (83.3) | 130,000 | 2.5 | 16.7 | 242 | 87 |
| Example 3-2 | PBAT (83.3) | 160,000 | 2.5 | 16.7 | 249 | 89 |

| | | | | | | |
|---|---|---|---|---|---|---|
| 1) PVC (manufacturer: Power Lab Co., Ltd., product name: Cling wrap) | | | | | | |

As can be seen in Table 4 above, it was confirmed that the resin composition according to the example of the present invention showed a simultaneous increase in oxygen permeability and moisture permeability compared to Comparative Example 3-1, which does not comprise triacetin, and compared to conventional wrap-purpose PVC and Comparative Example 3-3, which comprises a high content of triacetin, the oxygen permeability was lower while the moisture permeability was higher, confirming high potential for use as a breathable film.

## Claims

1. A resin composition comprising polybutylene adipate terephthalate (PBAT) and triacetin, wherein a weight average molecular weight of the polybutylene adipate terephthalate is 100,000 to 200,000 g/mol, and comprising 1 to 25 parts by weight of the triacetin based on a total of 100 parts by weight of the resin composition.

2. The resin composition according to Claim 1, wherein the weight average molecular weight of the polybutylene adipate terephthalate is 130,000 to 190,000 g/mol.

3. The resin composition according to Claim 1, wherein a polydispersity index (PDI) of the polybutylene adipate terephthalate is 2.5 or less.

4. The resin composition according to Claim 1, wherein a melt index of the polybutylene adipate terephthalate (measured at 190 °C under a 2.16 kg load in accordance with ASTM D1238) is 2.0 to 6.0 g/10 min.

5. The resin composition according to Claim 1, comprising 1 to 20 parts by weight of the triacetin based on a total of 100 parts by weight of the resin composition.

6. A biodegradable resin molded article comprising the resin composition according to any one of Claim 1 to Claim 5.

7. The biodegradable resin molded article according to Claim 6, wherein a modulus value measured in accordance with ASTM D882 is 30 to 100 MPa.

8. The biodegradable resin molded article according to Claim 6, wherein a tackiness value measured in accordance with ASTM D882 is 5 to 20 N.

9. The biodegradable resin molded article according to Claim 6, wherein an oxygen permeability of the biodegradable resin molded article is 100 to 400 cc/m²·day·atm based on a sheet thickness of 500 to 600 µm.

10. The biodegradable resin molded article according to Claim 6, wherein a moisture permeability of the biodegradable resin molded article is 50 to 95 g/m²·day based on a sheet thickness of 500 to 600 µm.
